# EUROPÄISCHE PATENTSCHRIFT

(11) **EP 0 520 205 B1**
(45) Veröffentlichungstag und Bekanntmachung des Hinweises auf die Patenterteilung: **09.08.1995**
(21) Anmeldenummer: 92109127.8
(22) Anmeldetag: 29.05.1992
(51) Int. Cl.: B23D 61/02

(54) **Kreissägeblatt sowie Verfahren zu dessen Herstellung**
Circular saw blade, as well as, method for its production
Lame de scie circulaire, ainsi que, méthode de sa production

(30) Priorität: 19.06.1991 DE 4120217
(43) Veröffentlichungstag der Anmeldung: 30.12.1992
(73) Patentinhaber: Wurster u. Dietz GmbH u. Co. Maschinenfabrik, D-72072 Tübingen (DE)
(72) Erfinder: Dietz, Hans, W-7403 Ammerbuch 2 (DE)
(74) Vertreter: Witte, Alexander, Dr.-Ing.

(56) Entgegenhaltungen:
- WO-A-88/02683
- US-A- 2 111 986
- US-A- 4 794 836
- WERKSTATTSTECHNIK 1. Februar 1913, BERLIN Seiten 78 - 81 P.V. DENFFER

## Beschreibung

Die Erfindung betrifft ein Verfahren zum Herstellen eines Kreissägeblattes unter Verwendung eines ebenen, flachen Ringkörpers, der an seinem Umfang mit Zähnen versehen ist, wobei der Ringkörper in einen konzentrischen, kegelförmigen Träger eingeschraubt und dabei in eine hohlkegelige Gestalt umgeformt wird.

Ein Verfahren der vorstehend genannten Art ist aus dem Dokument US-A-4 794 836 bekannt.

In der Sägetechnik besteht der allgemeine Wunsch, Schnittfugen so schmal wie möglich zu gestalten, um die Holzausbeute durch ein Minimum an zerspantem Holzvolumen soweit als möglich zu maximieren. Dies gilt insbesondere dann, wenn aus einem Profilholz eine Vielzahl dünner Bretter geschnitten werden soll, weil dann die Fugenbreite ein wesentlicher Faktor für die Holzausbeute ist.

Die Forderung nach einer möglichst dünnen Schnittfuge führt zwangsläufig zu besonders dünnen Kreissägeblättern. Nun kann man jedoch andererseits Kreissägeblätter nicht beliebig dünn ausbilden, weil es sonst Stabilitätsprobleme gibt, insbesondere dann, wenn man die gleichzeitig erwünschten hohen Vorschubgeschwindigkeiten bzw. Schnittgeschwindigkeiten einstellen will, um in einer bestimmten Zeit möglichst große Mengen an Holzprofilen zu zerteilen. Vergrößert man nämlich die Vorschub- bzw. Schnittgeschwindigkeit, so erhöht sich zugleich die radiale Belastung auf die Kreissägeblätter, mit der Folge, daß die sich einstellenden Stabilitätsprobleme um so größer werden, je dünner das Kreissägeblatt ist.

Aus dem Dokument WO 88/02683 ist ein Kreissägeblatt bekannt. Dieses bekannte Kreissägeblatt ist ebenso wie andere bekannte Kreissägeblätter so ausgebildet, daß es im achsnahen Bereich verdickt und an seinem Umfang flacher ausgebildet ist. Bekannte Kreissägeblätter weisen im allgemeinen eine ebene radiale Begrenzungsfläche auf, gelegentlich sind sie aber auch zu einer radialen Mittelebene symmetrisch ausgebildet und verdicken sich somit zu beiden Seiten der radialen Mittelebene.

Im Zusammenhang mit diesem Kreissägeblatt ist in dem genannten Dokument WO 88/02683 vorgeschlagen worden, Kreissägeblätter zusammen mit sogenannten Trennelementen zu verwenden. Hierunter versteht man ein gegenüber dem rotierenden Kreissägeblatt stillstehendes Element, das bis nahe an die Zähne des Kreissägeblattes heranreicht und das abgetrennte Seitenbrett sogleich nach dem Passieren der Zähne aus der Trennebene herausbiegt und außer Eingriff mit dem Kreissägeblatt bringt.

Mit derartigen Kreissägeblättern, die ein Trennelement aufweisen, kann man zwar die mechanische Belastung der Kreissägeblätter weiter vermindern, man stößt jedoch auch hier an Grenzen des Machbaren.

Aus dem eingangs genannten Dokument US-A-4 794 836 ist ein Schneidwerkzeug für Werkstoffe mit Wabenstruktur, sogenannte "Honeycomb-Cores", bekannt. Das bekannte Werkzeug weist einen Antriebs-Wellenstumpf auf, der eine Drehachse des Werkzeugs definiert. Am freien Ende des Wellenstumpfs ist ein rotationssymmetrischer Träger befestigt, der zum freien Ende hin mit einer konkaven Oberfläche versehen ist. Ein scheibenförmiges Schneidelement kann in diese konkave Oberfläche eingelegt und mittels eines zentralen Schraubbolzens mit vergrößertem Kopf dort fixiert werden. Das Schneidelement ist an seinem Umfang in acht Bereiche unterteilt, die jeweils mit Sägezähnen versehen und durch breite radiale Einschnitte voneinander getrennt sind. Die Sägezähne stehen radial über den Umfang des Trägers vor. Beim Zusammenbau des bekannten Werkzeugs wird das Schneidelement beim Eindrehen des zentralen Schraubbolzens, dessen vergrößerter Kopf auf der Rückseite konvex ausgebildet ist, gegen die konkave Oberfläche des Trägers gedrückt und in seiner Form an diese angepaßt.

Eine ähnliche Anordnung ist aus dem Dokument US-A-2 111 986 bekannt. In diesem Dokument ist eine Kreissäge zum Sägen von Schindeln beschrieben, wobei das Kreissägeblatt einen Durchmesser zwischen 102 und 152 Zentimetern aufweisen soll. Auf einer Antriebswelle des Kreissägeblatts ist ein rotationssymmetrischer Träger befestigt, der zum freien Ende der Antriebswelle hin eine konkave Oberfläche aufweist. Das Sägeblatt wird gegen diese konkave Oberfläche mittels einer Mehrzahl über einen Umfang verteilter Schrauben geschraubt. Das Kreissägeblatt steht mit seiner Peripherie weit über den Umfang des Trägers über.

Aus dem Dokument DE-Z "WERKSTATTSTECHNIK", 1. Februar 1913, Berlin, Seiten 78 bis 81 ist bekannt, Sägeblätter hohl zu schleifen, damit die auf einer Ebene des Sägeblattes liegenden Schneidkanten richtig zum Angriff gelangen und die Reibung des Sägeblattes an der zu bearbeitenden Fläche vermindert wird. Bei einem Kreissägeblatt mit einem Durchmesser von 60 Zentimetern soll der Hohlschliff im Zentrum des Sägeblattes etwa zwei bis drei Millimeter betragen.

Der Erfindung liegt die Aufgabe zugrunde, ein Verfahren zur Herstellung eines Kreissägeblattes der eingangs genannten Art anzugeben, bei dem das Kreissägeblatt noch höheren Anforderungen an Stabilität einerseits und dünne Bauform andererseits genügt, und die Herstellung erleichtert wird.

Gemäß dem eingangs genannten Verfahren wird diese Aufgabe erfindungsgemäß dadurch gelöst, daß der Ringkörper vor dem Einschrauben in entlang zu seiner Drehachse konzentrischen Kreisen gewalzt wird.

Die Erfindung hat den Vorteil, daß durch das Aufbringen von mehr oder weniger gewalzten ringförmigen Zonen auf dem Ringkörper ein "Umklappen" des Ringkörpers aus seiner ebenen Ausgangsstellung in die hohlkegelige Endstellung nach Einschrauben in den Träger erleichtert wird.

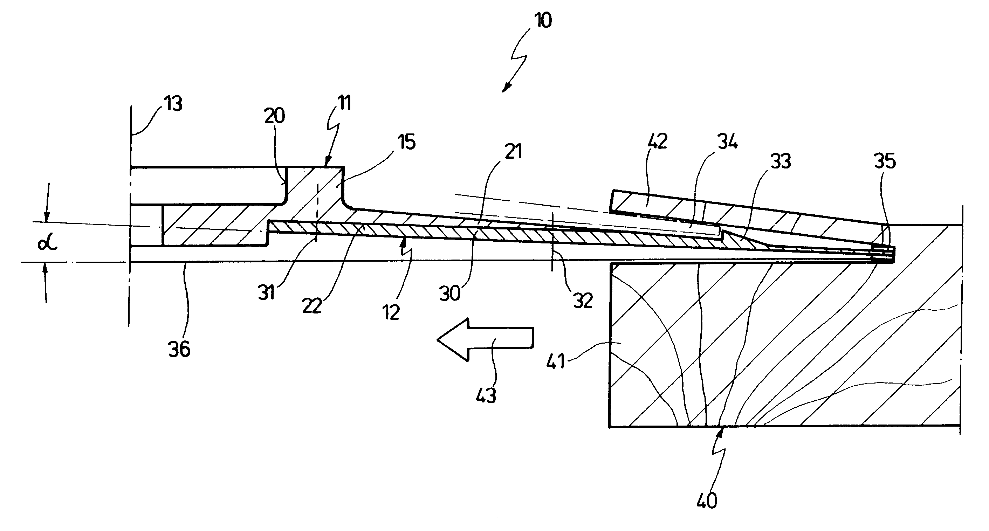

Ein Ausführungsbeispiel der Erfindung ist in der Zeichnung dargestellt und wird in der nachfolgenden Beschreibung näher erläutert.

Die einzige Figur zeigt einen Radialschnitt durch ein Ausführungsbeispiel eines erfindungsgemäß hergestellten Kreissägeblattes.

In der Figur bezeichnet 10 insgesamt ein Kreissägeblatt, das im wesentlichen aus einem Träger 11 und einem dünnen Blatt 12 besteht. Das Kreissägeblatt 10 ist im eingebauten Zustand um eine gemeinsame Achse 13 von Träger 11 und Blatt 12 drehbar.

Der Träger 11 hat im wesentlichen die Funktion, das Blatt 12 zu halten und mit einer Antriebswelle in geeigneter Weise zu verbinden. Hierzu verfügt der Träger 11 über einen zentralen Flansch 15 und eine geeignete Bohrung 20, um den Träger 11 mit dem Blatt 12 auf einer Antriebswelle einer Kreissäge befestigen zu können.

Nach außen hin geht der Träger 11 in einen flachen Randbereich 21 über, der beispielsweise um einige Grad gegenüber einer Radialebene geneigt ist.

Eine Besonderheit des Trägers 11 liegt darin, daß seine Unterseite 22 kegelförmig ausgedreht ist. Der Neigungswinkel des Kegels zu einer Radialeben ist in der Figur mit α bezeichnet. In der Praxis kann der Winkel α zwischen 0,1 ° und einigen Grad, vorzugsweise bei etwa 1° liegen. Dies führt bei einem Sägeblattdurchmesser in der Größenordnung von 600 mm z.B. zu einer Höhe des Kegels in der Achse 13 zwischen 0,5 und 5 mm.

Das Blatt 12 ist mit dem Träger 11 an mehreren Stellen verschraubt, wie mit Verschraubungen 31 und 32 in der Figur angedeutet.

Dort, wo das Blatt 12 an seinem Umfang über den flachen Randbereich 21 des Trägers 11 übersteht, ist es mit einem axial vorspringenden Rand 33 versehen. Der Rand 33 dient in an sich bekannter Weise dazu, den Übergang zu einem raumfesten, zumindest gegenüber dem rotierenden Kreissägeblatt 10 feststehenden Trennelement 34 zu bilden.

An seinem Außenumfang ist das Blatt 12 in an sich bekannter Weise mit Zähnen 35 vergehen, die insgesamt eine Trennebene 36 definieren.

Das Kreissägeblatt 10 wird vorzugsweise dazu verwendet, um ein Profilholz 40 zu zerteilen, in dem von einer Hauptware 41 eine Seitenware 42, beispielsweise ein Seitenbrett, abgetrennt wird. Hierzu werden das Profilholz 40 und das Kreissägeblatt 10 in Richtung eines Pfeils 43 zueinander verschoben. Üblicherweise befindet sich das Kreissägeblatt 10 an einer stationären Kreissäge, und das Profilholz 40 wird in Richtung des Pfeils 43 vorgeschoben.

Beim Abtrennen der Seitenware 42 wird diese nach dem Passieren der Zähne 35 über den Rand 33 auf das Trennelement 34 gelenkt, so daß die Seitenware 42 von dort an nicht mehr in mechanischem Kontakt mit dem rotierenden Kreissägeblatt 10 steht.

Da nun das Blatt 12 des Kreissägeblatts 10 konisch verformt ist, stellt der Kegelwinkel mehr oder weniger eine Fortsetzung des ebenfalls schräg angestellten Trennelementes 34 dar oder, anders ausgedrückt, der von dem Blatt 12 gebildete Hohlkegel ist bei einer Bauform eines Kreissägeblattes 10 mit Trennelement 34 in der Lage, in den ohnehin gebildeten Spalt zwischen Seitenware 42 und Hauptware 41 einzutauchen.

Es wurde bereits erwähnt, daß das Blatt 12 von unten gegen die konische Unterseite 22 des Trägers 11 geschraubt ist.

Dies geschieht vorzugsweise derart, daß ein im Ausgangszustand ebenes Blatt 12 durch das Anschrauben an die kegelförmige Unterseite 22 in eine Hohlkegelform umgeformt wird. Dies ist deswegen möglich, weil (im Gegensatz zu der nicht-maßstäblichen Zeichnung) das Blatt 12 sehr dünn ausgebildet ist und daher eine Umformung ohne zu große Umformkräfte bewirkt werden kann.

Um diesen Vorgang der Umformung zu unterstützen, ist vorgesehen, das Blatt 12 bereits während seiner Herstellung zu walzen, indem entlang konzentrischer, kreisförmiger Bahnen um die Achse 13 herum das Blatt 12 gewalzt wird. Es entstehen dann ringförmige Zonen unterschiedlicher Struktur, mit der Folge, daß beim Einschrauben des zunächst ebenen Blatts 12 dieses verhältnismäßig leicht in eine konische Form "umklappt".

## Patentansprüche

1. Verfahren zum Herstellen eines Kreissägeblattes (10) unter Verwendung eines ebenen, flachen Ringkörpers (30), der an seinem Umfang mit Zähnen (35) versehen ist, wobei der Ringkörper (30) in einen konzentrischen, kegelförmigen Träger (11) eingeschraubt und dabei in eine hohlkegelige Gestalt umgeformt wird, dadurch gekennzeichnet, daß der Ringkörper (30) vor dem Einschrauben in entlang zu seiner Drehachse (13) konzentrischen Kreisen gewalzt wird.

## Claims

1. A method for manufacturing a circular saw blade (10) comprising the step of providing a planar, flat annular member (30) having a periphery and being provided with teeth (35) therearound, wherein the annular member (30) is bolted into a concentric support member (11) of conical shape and is, thereby, deformed into a hollow conical shape, characterized in that the annular member (30), prior to being bolted, is rolled along circles extending concentrically around an annular member rotary axis (13).

## Revendications

1. Procédé de fabrication d'une lame de scie circulaire (10) en utilisant un corps annulaire (30) plan, mince, qui est pourvu de dents (35) sur son pourtour, dans lequel le corps annulaire (30) est vissé dans un support concentrique (11), conique, et prend alors la forme d'un corps conique creux, caractérisé en ce qu'avant d'être vissé, le corps annulaire (30) est laminé en cercles, concentriques par rapport à son axe de rotation (13).
